(19) Europäisches Patentamt
European Patent Office
Office européen des brevets

(11) **EP 3 119 088 A1**

(12) **EUROPEAN PATENT APPLICATION**

(43) Date of publication:
**18.01.2017 Bulletin 2017/03**

(51) Int Cl.:
*H04N 19/30* (2014.01)

(21) Application number: **15306162.7**

(22) Date of filing: **16.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicants:
• **Thomson Licensing**
**92130 Issy-les-Moulineaux (FR)**
• **INRIA - Institut National de Recherche en Informatique et en Automatique**
**78150 Le Chesnay (FR)**

(72) Inventors:
• **LE PENDU, Mikaël**
**35576 Cesson-Sévigné (FR)**
• **TURKAN, Mehmet**
**35576 Cesson-Sévigné (FR)**
• **THOREAU, Dominique**
**35576 Cesson-Sévigné (FR)**
• **GUILLEMOT, Christine**
**35042 Rennes Cedex (FR)**

(74) Representative: **Huchet, Anne et al**
**TECHNICOLOR**
**1-5, rue Jeanne d'Arc**
**92130 Issy-les-Moulineaux (FR)**

(54) **METHOD AND DEVICE FOR ENCODING AN IMAGE, METHOD AND DEVICE FOR DECODING AN IMAGE**

(57) A method and a device for encoding and decoding High Dynamic Range (HDR) images and videos whose pixels are represented by high bit depth integers. In particular, a scalable compression scheme involving numerical representation and prediction of color information for the HDR enhancement layer given and LDR layer by generating color prediction information in response to a reconstructed LDR layer and a reconstructed HDR layer.

Fig. 1

**Description**

TECHNICAL FIELD

In the following, a method and a device for encoding and decoding High Dynamic Range (HDR) images and videos whose pixels are represented by high bit depth integers.

BACKGROUND ART

In scalable video coding/decoding, enhancement layer (EL) pictures may be predicted from reconstructed base layer (BL) pictures. This is known as inter-layer prediction. In the case where the enhancement layer pictures and the base layer pictures are represented with different dynamic range (e.g. the enhancement layer pictures being high dynamic range pictures (HDR) and the base layer pictures being low dynamic range (LDR) pictures), the reconstructed base layer pictures are inverse tone mapped for use during inter-layer prediction. Known methods suggest determining an inverse tone mapping curve on the encoder side and transmitting the curve or parameters of the curve (e.g. a slope and an offset in case of a linear curve) in the stream for use by a decoder. Transmitting such curves/parameters for each coding unit, e.g. for each block, increases the coding cost.

Although standard compression tools already exist for scalable coding, they are dedicated to SNR, temporal or spatial scalability, such as the scalable extension of the H264/AVC standard. The more recent HEVC standard also has a similar scalable version, SHVC.

In the case of Dynamic Range scalability, current methods focus on the inter-layer prediction of the luma component of the HDR layer using the decoded luma component of the LDR base layer. Either local or global inverse tone mapping schemes can be used for that purpose. However, little attention has been given to the specificity of the chrominance prediction of the HDR layer. In the approaches where both the HDR and the LDR layers are encoded in the YCbCr colorspace, the Cb and Cr channels of the LDR layer are generally inverse tone mapped independently to predict respectively the Cb and Cr channels of the HDR layer.

It would be desirable to improve the performance of an encoder such as SHVC for the scalable encoding of HDR images with an LDR version of the same images obtained by an arbitrary Tone Mapping Operator (TMO). In particular, it would be desirable to predict the chrominance components of the HDR enhancement layer given the already encoded HDR luma component and the LDR base layer (luma and chrominance).

SUMMARY OF THE DISCLOSURE

In one aspect, the present disclosure involves a method for encoding an image comprising decoding an encoded image to generate a reconstructed image, decoding an encoded enhancement layer corresponding to said encoded image to generate a reconstructed enhancement layer, generating predicted color information in response to said reconstructed image and said reconstructed enhancement layer, comparing said predicted color information with color information from a high dynamic range image corresponding to said encoded image and said encoded enhancement layer to generate a residue; and transmitting said encoded image, said encoded enhancement layer and said residue.

In another aspect, the disclosure also involves an encoder comprising an image encoder for generating an image bitstream and a reconstructed image, an enhancement layer encoder for generating an enhancement layer bitstream and a reconstructed enhancement layer, a chrominance predictor for generating chrominance residue in response to the reconstructed image and the reconstructed enhancement layer, and a transmitter for transmitting the chrominance residue.

In another aspect the disclosure also involves a decoder comprising a memory for storing an encoded image, an encoded enhancement layer, and a residue, an image decoder for decoding said encoded image to generate a reconstructed image, an enhancement layer decoder for decoding said encoded enhancement layer corresponding to said encoded image to generate a reconstructed enhancement layer, and a color predictor for computing a predicted color information in response to said reconstructed image and said reconstructed enhancement layer, and generating an enhanced color information in response to said predicted color information and said residue.

BRIEF DESCRIPTION OF THE DRAWINGS

Fig. 1 shows a block diagram of an exemplary embodiment of an image encoding system according to the present invention.

Figure 2 shows a block diagram of an exemplary embodiment of an image decoding system according to the present invention.

Figure 3a shows a block diagram illustrating an exemplary Y'CbCr compression scheme according to the present invention according to the present invention.

Figure 3b shows a block diagram illustrating an exemplary International Commission on Illumination - also known as the CIE from its French title, the Commission Internationale de l'Eclairage (CIE) *u' v'* compression scheme according to the present invention according to the present invention.

Figure 4 shows a color correction method for generalizing any tone mapping operation (TMO) to color images according to the present invention.

Figure 5 shows a flowchart that illustrates a method for performing an encoding process according to an exemplary embodiment of the present invention

Figure 6 shows a flowchart that illustrates a method for performing a decoding process according to an exemplary embodiment of the present invention.

## DETAILED DESCRIPTION

In the following, the word "reconstructed" and "decoded" can be used interchangeably. Usually, the word "reconstructed" is used on the encoder side while the word "decoded" is used on the decoder side. It will be appreciated that the present principles are not restricted to square blocks in an enhancement layer.

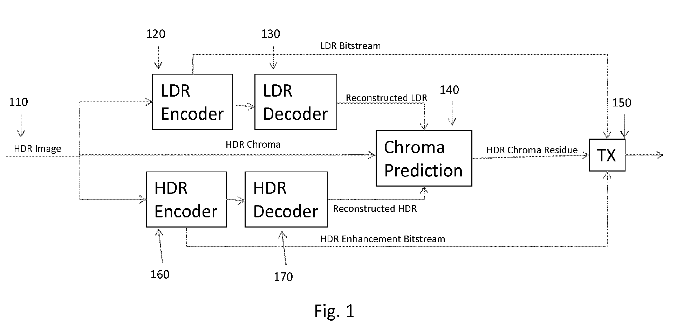

Fig. 1 is a block diagram 100 of an exemplary embodiment of an image encoding system. This embodiment is representative of a compression scheme where the base and enhancement layers are respectively a LDR image and its HDR version.

The original HDR image 110 may be represented by luminance values in cd/m$^2$. The human perception of luminance being non-linear, an Opto-Electrical Transfer function (OETF) and a quantization to integers must be applied first to generate a perceptually uniform HDR signal suitable for compression. The PQ-OETF function may be used to take input luminance values of up to 10000 cd/m$^2$ and outputs 12 bit integers. The exemplary compression scheme has been developed based on either Y'CbCr or CIE u'v' representation. The system is not limited to 12 bit integers, as 10 a 10 bit scheme may be employed.

The HDR image 110 is separated into a LDR image and an HDR enhancement layer representation. This process may be performed by tone mapping which translates the high dynamic range of the original HDR image to a range that can be represented by an LDR image format. The LDR image is coupled to the LDR encoder 120. The LDR encoder 120 is operative to generate an LDR bitstream. The LDR bitstream is coupled to the transmitter 150. The LDR bitstream is also coupled to an LDR decoder 130. The LDR decoder 130 is operative to reconstruct the LDR image. The LDR image is reconstructed in a manner consistent with how a receiver or decoder would reconstruct the image. Thus a prediction is generated at the encoder 100 of what LDR image will be generated at a decoder. The LDR decoder 130 may be a separate processing block or may integrated into the LDR encoder 120. The reconstructed LDR image is coupled to a chrominance prediction block 140.

The HDR enhancement layer is coupled to the HDR encoder 160. The HDR encoder 160 is operative to generate an HDR enhancement layer bitstream. The HDR enhancement layer bitstream is coupled to the transmitter 150. The HDR enhancement layer bitstream is also coupled to an HDR decoder 170. The HDR decoder 170 is operative to reconstruct the HDR enhancement layer. The HDR enhancement layer is reconstructed in a manner consistent with how a receiver or decoder would reconstruct the HDR enhancement layer. Thus a prediction is generated at the encoder 100 of what HDR enhancement layer will be generated at a decoder. This HDR decoder 170 may be a separate processing block or may integrated into the HDR encoder 160. The reconstructed HDR enhancement layer is coupled to a chrominance prediction block 140.

The chrominance prediction block 140 is operative to receive the reconstructed LDR image from the LDR decoder 130 and the reconstructed HDR enhancement layer from the HDR encoder 170. The chrominance prediction block 140 generates a predicted chrominance in response to the reconstructed LDR image and the reconstructed HDR enhancement layer. The chrominance prediction block 140 then compares the predicted chrominance to the original chrominance values of the original HDR image. An HDR chrominance residue is generated in response to this comparison and the HDR chrominance residue is coupled to the transmitter 150.

The transmitter 150 is operative to combine the LDR bitstream, the HDR enhancement layer bitstream, and the HDR chrominance reside into a format suitable for transmission. This may include one or more broadcast channels or frequencies. This signal may be transmitted via a wired network, a wireless network, or a broadcast system.

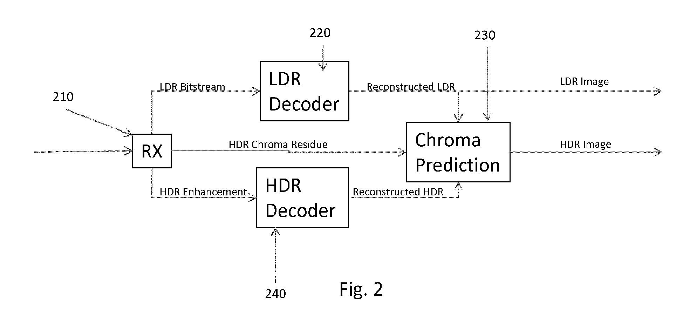

Fig. 2 is a block diagram of an exemplary embodiment of an image decoding system 200. The image decoding system is operative to receive an HDR image encoded in a manner previously described according to the image encoding system 100. The HDR image signal is received at the receiver 210. The receiver is operative to separate the LDR bitstream, the HDR enhancement layer bitstream and the HDR chrominance reside. The LDR bitstream is coupled to the LDR decoder.

The LDR decoder 220 is operative to decode the LDR bitstream to generate an reconstructed LDR. The reconstructed LDR is coupled to the chrominance prediction block 230.

The HDR enhancement layer bitstream separated by the receiver 210 is coupled to the HDR decoder 240. The HDR decoder 240 decodes the HDR enhancement layer bitstream to generate a reconstructed HDR enhancement layer. The reconstructed HDR enhancement layer is coupled to the chrominance prediction block 230.

The chrominance prediction block 230 is operative to generate an HDR image in response to the reconstructed HDR enhancement layer, the reconstructed LDR and the HDR chrominance residue. The chrominance prediction block 230 generates predicted chrominance values in response to the reconstructed HDR enhancement layer and the reconstructed LDR. The predicted chrominance values are then corrected using the HDR chrominance reside.

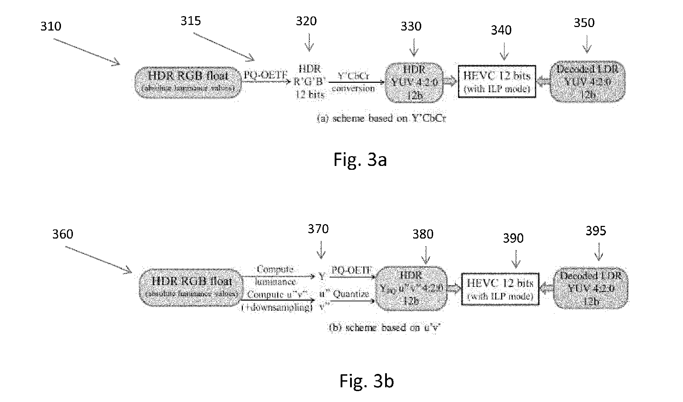

Turning now to Fig. 3a, a block diagram illustrating an exemplary Y'CbCr compression scheme according to the present invention are shown. In the Y'CbCr compression scheme, the HDR RGB float 310 absolute luminance values are used. The OETF 315 is applied to the R,G and B components independently and the resulting *R' G' B'* components 320 are converted to Y'CbCr color-space. This may be accomplished using the standard conversion matrix from the ITU-R BT-709 recommendations. The usual gamma correction may be replaced by the PQ-OETF which better models human perception, particularly for high luminance values. Then, the chrominance channels Cb and Cr are downsampled 330 and the image is sent to a modified version of HEVC 340, along with the decoded LDR YUV 350, which includes the inter-layer prediction mode in addition to the normal intra or inter modes.

Turning now to Fig. 3B, a block diagram illustrating an exemplary CIE *u' v'* compression scheme according to the present invention is shown. In this compression scheme, , the HDR RGB float 360 absolute luminance values are used.to compute the true luminance Y 370. The PQ-OETF is applied to the achromatic component to form the luma channel $Y_{PQ}$ 380. The CIE u'v' color coordinates are then computed from the linear RGB values. The modified u'v' components are noted u"v" and are computed according to the following formula :

$$u'' = (u' - u'_r) \cdot \frac{Y_{PQ}}{max(Y_{PQ}, \epsilon)} + u'_r$$
$$v'' = (v' - v'_r) \cdot \frac{Y_{PQ}}{max(Y_{PQ}, \epsilon)} + v'_r \qquad (1)$$

where $u'_r$ and $v'_r$ are the u'v' coordinates of the standard D65 illuminant : u'r = 0; 1978 and v'r = 0:4683. $\epsilon$ is a threshold on the luma $Y_{PQ}$ that may be set to 1000 in this exemplary embodiment which corresponds to an absolute luminance value of 4.75 cd/m$^2$. In response to this modification, the quantization of the color may be coarser in dark regions that may contain invisible color noise. In the decoding process, the u'v' coordinates are retrieved by performing the inverse operation.

The two color channels are formed by quantizing the u"v" pixel values. The quantization step of u" and v" may be chosen depending on the luma bitdepth in order to have improved repartition of the bitrate between luma and chromaticity. In this exemplary embodiment the chromaticity signal was quantizing to 1 bit less than the luma bitdepth thereby using 11 bits integers for the chromaticity. Using values of u" and v" between 0 and 0; 62, a factor of 3302 is applied to obtain quantized values $u''_Q$ and $v''_Q$ in the range [0; 2$^{11}$ - 1], as shown in equation 2.

$$u''_Q = \lceil 3302 \cdot u'' \rceil, \qquad v''_Q = \lceil 3302 \cdot v'' \rceil \qquad (2)$$

where $u''_Q$ and $v''_Q$ are rounded to the nearest integer. Similarly to the Y'CbCr scheme, the chromatic components $u''_Q$ and $v'_Q$ are downsampled before encoding the image. In order to keep compatibility with typical LDR encoding schemes, the LDR layer is encoded in the YUV 420 format 395 (i.e. Y'CbCr color-space with both horizontal and vertical downsampling). The interlayer prediction method of this exemplary embodiment is not limited to the case of a LDR layer generated with a global TMO. The color channels are sent to a modified version of HEVC 390, along with the decoded LDR YUV 395, which includes the inter-layer prediction mode in addition to the normal intra or inter modes.

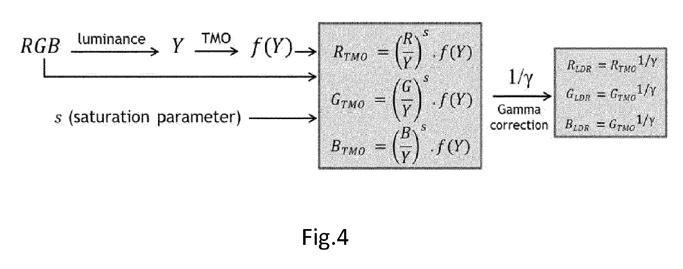

Turning now to Fig. 4, a color correction method for generalizing any TMO to color images is shown. According to this exemplary embodiment, the TMO f, that can be either global or local, is first applied to the luminance Y. The tone mapped RGB components are then obtained based on a saturation parameter s, the tone mapped luminance f(Y) and the ratio between the HDR RGB components and the original luminance Y . Since the tone mapping is performed on linear RGB values a further gamma correction is applied. The final gamma corrected LDR RGB components are then expressed by:

$$C_{LDR} = \left(\frac{C}{Y}\right)^{\frac{s}{\gamma}} \cdot f(Y)^{\frac{1}{\gamma}} \qquad (3)$$

with C = R,G,B.

With this color correction, the hue of the original HDR image is well preserved in the tone mapped image and the saturation of the LDR image can be manually adjusted with the parameter s. These properties are used for preserving the artistic intent in the LDR version. Considering the color correction of equation 3 as a model for Tone mapping operators, prediction equations of the chromatic components (e.g. u'v' or CbCr) can be derived.

The u'v' color coordinates can be computed from the CIE XYZ values using:

$$u' = \frac{4 \cdot X}{X + 15 \cdot Y + 3 \cdot Z}$$
$$v' = \frac{9 \cdot Y}{X + 15 \cdot Y + 3 \cdot Z} \qquad (4)$$

Since the linear RGB components can be expressed as a linear combination of X, Y and Z, equation 4 can be written as:

$$u' = \frac{a_0 \cdot R + a_1 \cdot G + a_2 \cdot B}{b_0 \cdot R + b_1 \cdot G + b_2 \cdot B}$$
$$v' = \frac{c_0 \cdot R + c_1 \cdot G + c_2 \cdot B}{b_0 \cdot R + b_1 \cdot G + b_2 \cdot B} \qquad (5)$$

where the coefficients $a_0$, to $c_2$ are fixed values depending on the chromaticities of the HDR RGB color-space. In the case of BT-709 RGB, the values of the coefficients are :

a0 = 1; 650 a1 = 1; 430 a2 = 0; 722
b0 = 3; 661 b1 = 11; 442 b2 = 4; 114
c0=1;914c1 =6;436c2=0;650

From the model described in equation 3 it can directly determine:

$$f(Y)^{\frac{1}{s}} = R_{LDR}^{\frac{\gamma}{s}} \cdot \frac{Y}{R} = G_{LDR}^{\frac{\gamma}{s}} \cdot \frac{Y}{G} = B_{LDR}^{\frac{\gamma}{s}} \cdot \frac{Y}{B} \quad (6)$$

Thus,

$$\begin{cases} R_{LDR}^{\frac{\gamma}{s}} = G_{LDR}^{\frac{\gamma}{s}} \cdot \frac{R}{G} \\ B_{LDR}^{\frac{\gamma}{s}} = G_{LDR}^{\frac{\gamma}{s}} \cdot \frac{B}{G} \end{cases} \qquad (7)$$

Rewriting u' from equation 5 :

$$u' = \frac{\left(a_0 \cdot \frac{R}{G} + a_1 + a_2 \cdot \frac{B}{G}\right) \cdot G_{LDR}^{\frac{\gamma}{s}}}{\left(b_0 \cdot \frac{R}{G} + b_1 + b_2 \cdot \frac{B}{G}\right) \cdot G_{LDR}^{\frac{\gamma}{s}}} \qquad (8)$$

From the formulation in equation 8 and the equations of the model 7, a prediction value $u'_{pred}$ can be obtained for u' based only on the LDR RGB and the model parameter values. The expression of $v'_{pred}$ is obtained in a similar manner:

$$u'_{pred} = \frac{a_0 \cdot R_{LDR}^{\frac{\gamma}{s}} + a_1 \cdot G_{LDR}^{\frac{\gamma}{s}} + a_2 \cdot B_{LDR}^{\frac{\gamma}{s}}}{b_0 \cdot R_{LDR}^{\frac{\gamma}{s}} + b_1 \cdot G_{LDR}^{\frac{\gamma}{s}} + b_2 \cdot B_{LDR}^{\frac{\gamma}{s}}}$$
$$v'_{pred} = \frac{c_0 \cdot R_{LDR}^{\frac{\gamma}{s}} + c_1 \cdot G_{LDR}^{\frac{\gamma}{s}} + c_2 \cdot B_{LDR}^{\frac{\gamma}{s}}}{b_0 \cdot R_{LDR}^{\frac{\gamma}{s}} + b_1 \cdot G_{LDR}^{\frac{\gamma}{s}} + b_2 \cdot B_{LDR}^{\frac{\gamma}{s}}} \tag{9}$$

Hence, given the ratio between the parameters $\gamma$ and $s$, and the decoded LDR data, we can directly predict the HDR $u'$ and $v'$ color components by applying the standard u'v' conversion equations to the decoded LDR RGB values raised to the power $\gamma/s$. The compression scheme is based on the modified version u"v" of the CIE u'v' coordinates, the predictions u"$_{pred}$ and v"$_{pred}$ are formed with equation 1 using u'$_{pred}$, v'$_{pred}$ and the decoded HDR luma. Finally, predictions u"$_{pred}$ and v"$_{pred}$ are multiplied by 3302 and rounded to the nearest integer, as in equation 2, to predict the quantized values $u''_Q$ and $v''_Q$.

In the case where the HDR layer is encoded in Y'CbCr color-space, a different prediction scheme is used. Unlike the u'v' coordinates, the Cb and Cr chrominance components are not predicted directly. First, the HDR RGB values are predicted in the linear domain. Then, the PQ-OETF curve is applied to the predicted RGB values before computing the chrominance prediction. For the derivation of prediction equations of the RGB components:

$$X_r = \frac{R}{G}, \qquad Xb = \frac{B}{G} \tag{10}$$

From the equation of the model 3:

$$R_{LDR} = \left(\frac{R}{Y}\right)^{\frac{s}{\gamma}} \cdot f(Y)^{\frac{1}{\gamma}} = X_r^{\frac{s}{\gamma}} \cdot \left(\frac{G}{Y}\right)^{\frac{s}{\gamma}} \cdot f(Y)^{\frac{1}{\gamma}}$$
$$= X_r^{\frac{s}{\gamma}} \cdot G_{LDR} \tag{11}$$

The ratios Xr and Xb can thus be found using only the LDR RGB components :

$$X_r = \left(\frac{R_{LDR}}{G_{LDR}}\right)^{\frac{\gamma}{s}}, \qquad X_b = \left(\frac{B_{LDR}}{G_{LDR}}\right)^{\frac{\gamma}{s}} \tag{12}$$

Using the ratios $X_r$ and $X_b$, and the luminance expressed as a linear combination of the RGB components:

$$Y = \alpha_0 \cdot R + \alpha_1 \cdot G + \alpha_2 \cdot B$$
$$= (\alpha_0 \cdot X_r + \alpha_1 + \alpha_2 \cdot X_b) \cdot G \tag{13}$$

Thus,

$$G = \frac{Y}{\alpha_0 \cdot X_r + \alpha_1 + \alpha_2 \cdot X_b}$$
$$R = X_r \cdot G \tag{14}$$
$$B = X_b \cdot G$$

where the coefficients $\alpha_0$, $\alpha_1$ and $\alpha_2$, depend on the RGB colorspace used. For the BT-709 colorspace, $\alpha_0$ = 0:2126, $\alpha_1$ = 0:7152 and $\alpha_2$ = 0:0722. However, the true luminance Y is not known in the Y'CbCr scheme. Only an approximation $\tilde{Y}$ is obtained when the inverse PQ-OETF curve PQ$^{-1}$ is applied to the luma channel $Y'$. The predicted RGB values can then be obtained by applying equation 14 and by replacing $Y$ by $\tilde{Y} = PQ^{-1}(Y')$. This can be inaccurate particularly in very saturated regions where one of the components is close to zero. Better results can be obtained by approximating the PQ-OETF function by a power law in the expression of $\tilde{Y}$:

$$\tilde{Y} \approx \left( \alpha_0 \cdot R^{\frac{1}{P}} + \alpha_1 \cdot G^{\frac{1}{P}} + \alpha_2 \cdot B^{\frac{1}{P}} \right)^P$$
$$\approx \left( \alpha_0 \cdot X_r^{\frac{1}{P}} + \alpha_1 + \alpha_2 \cdot X_b^{\frac{1}{P}} \right)^P \cdot G \qquad (15)$$

Finally the approximation for the green component G is given by:

$$G \approx \frac{\tilde{Y}}{\left( \alpha_0 \cdot X_r^{\frac{1}{P}} + \alpha_1 + \alpha_2 \cdot X_b^{\frac{1}{P}} \right)^P} \qquad (16)$$

Note that for p = 1, this is equivalent to the previous approximation (i.e. $\tilde{Y} \sim Y$).

In order to increase the robustness of the prediction, the implementation could use a slightly modified version of the ratios $X_r$ and $X_b$ :

$$\widetilde{X_r} = \left( \frac{R_{LDR} + \epsilon}{G_{LDR} + \epsilon} \right)^{\frac{1}{s}}, \quad \widetilde{X_b} = \left( \frac{B_{LDR} + \epsilon}{G_{LDR} + \epsilon} \right)^{\frac{1}{s}} \qquad (17)$$

where ε is a small value fixed to 1% of the maximum LDR value (i.e. ε = 2; 55 for a 8 bit LDR layer). Compared to the result provided in equation 12, the prediction of the ratios reduces the noise in dark regions and avoids the risk of division by zero. The actual HDR RGB prediction is then computed from the decoded LDR RGB components and the decoded HDR luma $Y'$ using the following equation :

$$G_{pred} = \frac{PQ^{-1}(Y')}{\left( \alpha_0 \cdot \widetilde{X_r}^{\frac{1}{P}} + \alpha_1 + \alpha_2 \cdot \widetilde{X_b}^{\frac{1}{P}} \right)^P}$$
$$R_{pred} = \widetilde{X_r} \cdot G_{pred}$$
$$B_{pred} = \widetilde{X_b} \cdot G_{pred} \qquad (18)$$

The Cb and Cr components are finally predicted by applying back the PQ-OETF to $R_{pred}$, $G_{pred}$ and $B_{pred}$ and by computing the chrominance.

In both the Y'CbCr and the u"v" encoding schemes, the prediction of the chrominancetic components is based on the decoded LDR RGB components and the HDR luma. For a given block in the image the luma block is encoded and decoded before the chromatic components. As a result, the decoded luma block is known while encoding or decoding the u" and v" blocks. However, since the color components are downsampled horizontally and vertically, the same downsampling must be performed to the decoded luma channel. A downsampling scheme consisting in taking the mean of the four luma pixels collocated with a given chrominance pixel is used. In the Y'CbCr encoding scheme, the inverse PQ-OETF is applied after the luma downsampling for the computation of $\tilde{Y}$.

Similarly, The LDR RGB components are given in low resolution for performing the prediction. Since the LDR layer is originally encoded in the YUV 4:2:0 format, only the LDR luma needs to be downsampled. The low resolution LDR luma and chrominance are then converted to RGB.

In general, a first step in an exemplary method according to the present invention may consist of determining the model's parameters s and γ that best fit the HDR and LDR image couple. This can be done in a preprocessing stage before the encoding. After which, the computation may be performed using the original LDR and HDR images without compression. Using the previously provided equations, only the ratio s' = s/γ need be determined.

From the color model in equation 3 :

$$f(Y)^{\frac{1}{\gamma}} = R_{LDR} \cdot \left( \frac{Y}{R} \right)^{s'} = G_{LDR} \cdot \left( \frac{Y}{G} \right)^{s'} = B_{LDR} \cdot \left( \frac{Y}{B} \right)^{s'} \qquad (19)$$

Thus, it is desirable to find the value of s' that minimizes the mean square error (MSE) on all the pixels between the terms of this equation. In an exemplary embodiment of the method, only the red and green components are used in the minimization problem. For natural content, no difference was observed when the blue component was taken into account. Given a pixel i:

$$F^i(s') = \left( R^i_{LDR} \cdot \left( \frac{Y^i}{R^i} \right)^{s'} - G^i_{LDR} \cdot \left( \frac{Y^i}{G^i} \right)^{s'} \right)^2 \quad (20)$$

where $R^i_{LDR}$, $G^i_{LDR}$, $R^i$ and $G^i$ are respectively the values of $R_{LDR}$, $G_{LDR}$, R and G at pixel position i.

The problem to solve is then be expressed by :

$$\tilde{s'} = \underset{s'}{argmin} \sum_{i=1}^{n} F^i(s') \quad (21)$$

where n is the number of pixels. The problem in equation 21 can be solved by finding the value of s0 for which

$$\sum_{i=1}^{n} F^{i'}(s') = 0.$$

Newton's iterative numerical method is used for that purpose. Given an initialization value $s'_0 = 0,4$, the value $s'_k$ at iteration k is given by :

$$s'_k = s'_{k-1} - \frac{\sum_{i=1}^{n} F^{i'}(s'_{k-1})}{\sum_{i=1}^{n} F^{i''}(s'_{k-1})} \quad (22)$$

where the two first derivatives $F^{i'}$ and $F^{i''}$ can be determined analytically. We obtain :

$$F^{i'}(s') = A^i_{11} \cdot \left( \frac{Y^i}{R^i} \right)^{2s'} + A^i_{12} \cdot \left( \frac{Y^i}{G^i} \right)^{2s'} \quad (23)$$
$$+ A^i_{13} \cdot \left( \frac{(Y^i)^2}{R^i \cdot G^i} \right)^{s'}$$

$$F^{i''}(s') = A^i_{21} \cdot \left( \frac{Y^i}{R^i} \right)^{2s'} + A^i_{22} \cdot \left( \frac{Y^i}{G^i} \right)^{2s'} \quad (24)$$
$$+ A^i_{23} \cdot \left( \frac{(Y^i)^2}{R^i \cdot G^i} \right)^{s'}$$

with

$$A^i_{11} = 2 \cdot \ln \left( \frac{Y^i}{R^i} \right) \cdot (R^i_{LDR})^2$$

$$A^i_{12} = 2 \cdot \ln \left( \frac{Y^i}{G^i} \right) \cdot (G^i_{LDR})^2$$

$$A_{13}^i = -2 \cdot \ln\left(\frac{(Y^i)^2}{R^i \cdot G^i}\right) \cdot R_{LDR}^i \cdot G_{LDR}^i$$

$$A_{21}^i = A_{11}^i \cdot 2 \cdot \ln\left(\frac{Y^i}{R^i}\right)$$

$$A_{22}^i = A_{12}^i \cdot 2 \cdot \ln\left(\frac{Y^i}{G^i}\right)$$

$$A_{23}^i = A_{13}^i \cdot \ln\left(\frac{(Y^i)^2}{R^i \cdot G^i}\right)$$

The iterative process in equation 22 may be stopped when the difference between the value of s' at two successive iterations converge and three iterations were usually sufficient to reach the precision of $10^{-4}$. In order to increase the robustness of the method, some pixels may be removed from the sums in equation 22. First, the pixels for which at least one of the HDR RGB components is less than a threshold of 0, 02 are removed. Those pixels are not reliable because of the color noise that may appear in very dark regions. Moreover, too small $R^i$, $G^i$ or $B^i$ values may cause inaccurate computations of $F^{i'}$ and $F^{i''}$ in equations 23 and 24. A second type of problem may appear for too bright pixels. In practice, after tone mapping, some pixel's RGB values may exceed the maximum LDR value for one or several RGB components. A simple clipping operation may be applied in this case in order to keep all the values in the LDR range. However, since this operation is performed on the RGB channels independently, it may modify the hue of the clipped pixels. Therefore, the assumption of preservation of the hue in the model may no longer be satisfied and it may be desirable to exclude from the computation all the pixels that exceed 99% of the maximum LDR value in at least one of the components $R_{LDR}$, $G_{LDR}$ or

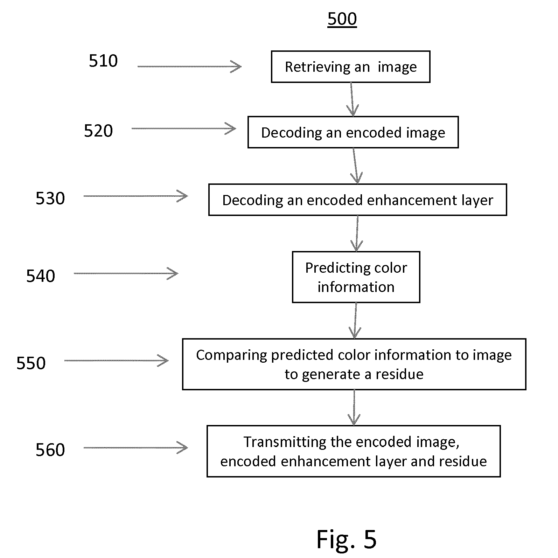

Turning now to Fig. 5, a method for performing an encoding process 500 according to an exemplary embodiment of the present invention is shown. The system is operative to receive data representative of an HDR image 510. This data may be either an HDR image or the combination of an LDR image and an HDR enhancement layer. The HDR enhancement layer may include luminance information.

The system is then operative to decode the encoded LDR image 520. The received LDR image may have been received encoded, or it may be encoded by the system before decoding. As a result of the decoding step, a reconstructed LDR image is generated

The system is then operative to decode the encoded HDR enhancement layer 530. The received HDR enhancement layer may be received encoded, or it may be encoded by the system before decoding. As a result of the decoding step, a reconstructed HDR enhancement layer is generated.

The system is then operative to predict color information using the reconstructed LDR image and the reconstructed HDR enhancement layer 540. This prediction results in a predicted color information. The predicted color information is subtracted from color information included in the original HDR imaged to generate a residue 550. The residue, the encoded HDR enhancement layer and the encoded LDR image are combined in a manner useful for transmission and transmitted 560.

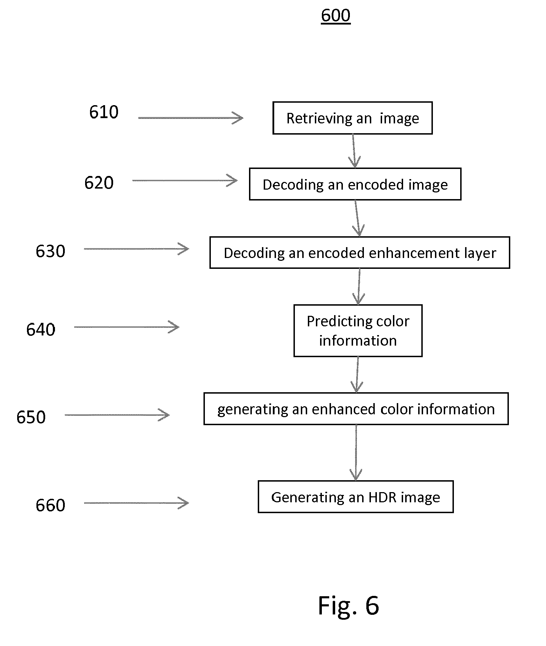

Turning now to Fig. 6, a method for performing a decoding process 600 according to an exemplary embodiment of the present invention is shown. The system is operative to receive data representing an HDR image 610. The HDR image is represented by an encoded LDR image, and encoded HDR enhancement layer, and a residue. The residue indicates a difference between a predicted color information and original HDR image color information.

The system is operative to decode the encoded LDR image 620 to generate a reconstructed LDR image. The system is further operative to decode an encoded HDR enhancement layer 630 to generate a reconstructed HDR enhancement layer. The reconstructed LDR image and the reconstructed HDR enhancement layer are used to predict HDR color information 640.

The system is then operative to generate an enhanced color information 650 by adding the residue to the predicted color information. The enhanced color information is then combined with the reconstructed LDR image and the reconstructed HDR enhancement layer to generate an HDR image 660.

A method for decoding an image may comprise the steps of receiving an encoded image, an encoded enhancement layer, and a residue, decoding said encoded image to generate a reconstructed image, decoding said encoded enhancement layer corresponding to said encoded image to generate a reconstructed enhancement layer, generating a predicted color information in response to said reconstructed image and said reconstructed enhancement layer; and generating an enhanced color information in response to said predicted color information and said residue. The encode image may be a low dynamic range image. The low dynamic range image may have a luma component and a chrominance component. Optionally, the low dynamic range image may have a luma component and at least two chrominance components. The encoded enhancement layer may be a high dynamic range luma component. Optionally, the encoded enhancement layer may have a high dynamic range luma component and a high dynamic range chrominance component.

A decoder according to the present disclosure may comprise a memory for storing an encoded image, an encoded enhancement layer, and a residue, an image decoder for decoding said encoded image to generate a reconstructed image, an enhancement layer decoder for decoding said encoded enhancement layer corresponding to said encoded image to generate a reconstructed enhancement layer, and a color predictor for computing a predicted color information in response to said reconstructed image and said reconstructed enhancement layer, and generating an enhanced color information in response to said predicted color information and said residue. The encoded image may be a low dynamic range image. The low dynamic range image may have a luma component and a chrominance component. Optionally, the low dynamic range image may have a luma component and at least two chrominance components. The encoded enhancement layer may be a high dynamic range luma component. Optionally, the encoded enhancement layer may be a high dynamic range luma component and a high dynamic range chrominance component.

The system according to the present disclosure may be operative for encoding an image by decoding an encoded image to generate a reconstructed image, decoding an encoded enhancement layer corresponding to said encoded image to generate a reconstructed enhancement layer, generating predicted color information in response to said reconstructed image and said reconstructed enhancement layer, comparing said predicted color information with color information from a high dynamic range image corresponding to said encoded image and said encoded enhancement layer to generate a residue, and transmitting said encoded image, said encoded enhancement layer and said residue. The encoded image may be a low dynamic range image having a luma component and a chrominance component. Optionally, the low dynamic range image may have a luma component and at least two chrominance components. The encoded enhancement layer may have a high dynamic range luma component. Optionally, the encoded enhancement layer may have a high dynamic range luma component and a high dynamic range chrominance component.

The system according to the present disclosure may include an encoder comprising an image encoder for generating an image bitstream and a reconstructed image, an enhancement layer encoder for generating an enhancement layer bitstream and a reconstructed enhancement layer, a chrominance predictor for generating chrominance residue in response to the reconstructed image and the reconstructed enhancement layer, and a transmitter for transmitting the chrominance residue.. The encoded image may be a low dynamic range image having a luma component and a chrominance component. Optionally, the low dynamic range image may have a luma component and at least two chrominance components. The encoded enhancement layer may have a high dynamic range luma component. Optionally, the encoded enhancement layer may have a high dynamic range luma component and a high dynamic range chrominance component.

The system according to the present disclosure may include be further operative for receiving an LDR image and an HDR luma enhancement layer, encoding the LDR image to generate an encoded LDR image signal, decoding the encoded LDR image signal to generate a reconstructed LDR image, encoding the HDR Luma enhancement layer to generate an encoded HDR Luma enhancement layer signal, decoding the encoded HDR Luma enhancement layer signal to generate a reconstructed HDR Luma enhancement layer, predicting an HDR chrominance enhancement layer in response to said reconstructed HDR Luma enhancement layer and said reconstructed LDR image, generating a residue in response to said HDR chrominance enhancement layer, encoding said residue to generate a residue signal, combining said HDR chrominance enhancement layer signal, said residue signal, and said LDR image signal to generate a bitstream; and transmitting said bitstream.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a preprocessor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for encoding an image comprising:

   - Decoding an encoded image to generate a reconstructed image;
   - Decoding an encoded enhancement layer corresponding to said encoded image to generate a reconstructed enhancement layer;
   - Generating predicted color information in response to said reconstructed image and said reconstructed enhancement layer;
   - Comparing said predicted color information with color information from a high dynamic range image corresponding to said encoded image and said encoded enhancement layer to generate a residue; and
   - Transmitting said encoded image, said encoded enhancement layer and said residue.

2. A method for decoding an image comprising:

   - Receiving an encoded image, an encoded enhancement layer, and a residue;
   - Decoding said encoded image to generate a reconstructed image;
   - Decoding said encoded enhancement layer corresponding to said encoded image to generate a reconstructed enhancement layer;
   - Generating a predicted color information in response to said reconstructed image and said reconstructed enhancement layer; and
   - Generating an enhanced color information in response to said predicted color information and said residue.

3. An encoder comprising:

   - An image encoder for generating an encoded image and a reconstructed image;
   - An enhancement layer encoder for generating an encoded enhancement layer and a reconstructed enhancement layer;
   - A chrominance predictor for generating chrominance residue in response to the reconstructed image and the reconstructed enhancement layer; and
- A transmitter for transmitting the chrominance residue.

4. The method of claim 1 or 2 or encoder of claim 3 wherein said encoded image is a low dynamic range image.

5. The method of claim 4 wherein said low dynamic range image has a luma component and a chrominance component.

6. The method of claim 4 wherein said low dynamic range image has a luma component and at least two chrominance components.

7. The method of claim 1 or 2 or encoder of claim 3 wherein said encoded enhancement layer is a high dynamic range luma component.

8. The method of claim 1 or 2 or encoder of claim 3 wherein said encoded enhancement layer is a high dynamic range luma component and a high dynamic range chrominance component.

9. A decoder comprising:

   - A memory for storing an encoded image, an encoded enhancement layer, and a residue;
   - An image decoder for decoding said encoded image to generate a reconstructed image;
   - An enhancement layer decoder for decoding said encoded enhancement layer corresponding to said encoded image to generate a reconstructed enhancement layer; and
   - A color predictor for computing a predicted color information in response to said reconstructed image and said reconstructed enhancement layer, and generating an enhanced color information in response to said predicted color information and said residue.

10. The decoder of claim 9 wherein said encoded image is a low dynamic range image.

11. The decoder of claim 10 wherein said low dynamic range image has a luma component and a chrominance component.

12. The decoder of claim 10 wherein said low dynamic range image has a luma component and at least two chrominance components.

13. The decoder of claim 9 wherein said encoded enhancement layer is a high dynamic range luma component.

14. The decoder of claim 9 wherein said encoded enhancement layer is a high dynamic range luma component and a high dynamic range chrominance component.

15. The method of claim 1 further comprising any of:

   - receiving an LDR image and an HDR Luma enhancement layer;
   - encoding the LDR image to generate an encoded LDR image signal;
   - decoding the encoded LDR image signal to generate a reconstructed LDR image;
   - encoding the HDR Luma enhancement layer to generate an encoded HDR Luma enhancement layer signal;
   - decoding the encoded HDR Luma enhancement layer signal to generate a reconstructed HDR Luma enhancement layer;
   - predicting an HDR chrominance enhancement layer in response to said reconstructed HDR Luma enhancement layer and said reconstructed LDR image;
   - generating a residue in response to said HDR chrominance enhancement layer;
   - encoding said residue to generate a residue signal;
   - combining said HDR chrominance enhancement layer signal, said residue signal, and said LDR image signal to generate a bitstream; and
   - transmitting said bitream.

Fig. 1

220                              230

LDR Bitstream    ┌──────────┐   Reconstructed LDR                        LDR Image
─────────────────▶│   LDR    │──────────────────────────────────────────────────▶
210              │ Decoder  │                    │         │
                 └──────────┘                    ▼         ▼
         ┌────┐  HDR Chroma Residue        ┌──────────────┐              HDR Image
─────────▶│ RX │───────────────────────────▶│   Chroma     │──────────────────────▶
         └────┘                            │  Prediction  │
             HDR Enhancement   ┌──────────┐ Reconstructed HDR │         │
             ─────────────────▶│   HDR    │──────────────────▶│         │
                               │ Decoder  │              └──────────────┘
                               └──────────┘
                                    │
                                    │
                                   240            Fig. 2

310          315          320          330          340          350

HDR RGB float | PQ-OETF | HDR R'G'B' 12 bits | Y'CbCr conversion | HDR YUV 4:2:0 12b | HEVC 12 bits (with ILP mode) | Decoded LDR YUV 4:2:0 12b
(absolute luminance values)

(a) scheme based on Y'CbCr

## Fig. 3a

360          370          380          390          395

HDR RGB float | Compute luminance → Y | PQ-OETF | HDR Y₁₀₀ u" v" 4:2:0 12b | HEVC 12 bits (with ILP mode) | Decoded LDR YUV 4:2:0 12b
(absolute luminance values) | Compute u" v" (+downsampling) → u" v" | Quantize

(b) scheme based on u'v'

## Fig. 3b

$$RGB \xrightarrow{\text{luminance}} Y \xrightarrow{\text{TMO}} f(Y) \rightarrow$$

$$R_{TMO} = \left(\frac{R}{Y}\right)^s \cdot f(Y)$$

$$G_{TMO} = \left(\frac{G}{Y}\right)^s \cdot f(Y)$$

$$B_{TMO} = \left(\frac{B}{Y}\right)^s \cdot f(Y)$$

$s$ (saturation parameter)

$$\xrightarrow[\text{Gamma correction}]{1/\gamma}$$

$$R_{LDR} = R_{TMO}{}^{1/\gamma}$$

$$G_{LDR} = G_{TMO}{}^{1/\gamma}$$

$$B_{LDR} = G_{TMO}{}^{1/\gamma}$$

Fig.4

<u>500</u>

510           ⟶        Retrieving an image

520           ⟶        Decoding an encoded image

530           ⟶        Decoding an encoded enhancement layer

540           ⟶        Predicting color information

550           ⟶        Comparing predicted color information to image to generate a residue

560           ⟶        Transmitting the encoded image, encoded enhancement layer and residue

Fig. 5

600

610 ——————→ Retrieving an image

620 ——————→ Decoding an encoded image

630 ——————→ Decoding an encoded enhancement layer

640 ——————→ Predicting color information

650 ——————→ generating an enhanced color information

660 ——————→ Generating an HDR image

Fig. 6

Europäisches
Patentamt

European
Patent Office

Office européen
des brevets

# EUROPEAN SEARCH REPORT

Application Number

EP 15 30 6162

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZICONG MAI ET AL: "Optimizing a Tone Curve for Backward-Compatible High Dynamic Range Image and Video Compression", IEEE TRANSACTIONS ON IMAGE PROCESSING, vol. 20, no. 6, 1 June 2011 (2011-06-01), pages 1558-1571, XP011411814, ISSN: 1057-7149, DOI: 10.1109/TIP.2010.2095866 * sections II and III * | 1-15 | INV.<br>H04N19/30 |
| X | WO 2012/004709 A1 (KONINKL PHILIPS ELECTRONICS NV [NL]; MUIJS REMCO THEODORUS JOHANNES [N) 12 January 2012 (2012-01-12) * page 43, line 1 - page 45, line 25 * * figure 12 * | 1-15 | |
| X | WO 2010/101420 A2 (SAMSUNG ELECTRONICS CO LTD [KR]) 10 September 2010 (2010-09-10) * the whole document * | 1-15 | |
| X | EP 2 697 962 A2 (DOLBY LAB LICENSING CORP [US]) 19 February 2014 (2014-02-19) * paragraphs [0018] - [0021] * * paragraphs [0025] - [0041] * * paragraphs [0066] - [0072] * * figures 1,2 * | 1-15 | TECHNICAL FIELDS SEARCHED (IPC)<br><br>H04N<br>G09G |
| X | US 2008/175495 A1 (SEGALL CHRISTOPHER A [US]) 24 July 2008 (2008-07-24) * paragraphs [0018] - [0029] * * figure 5 * | 1-15 | |

-/--

The present search report has been drawn up for all claims

| Place of search | Date of completion of the search | Examiner |
|---|---|---|
| The Hague | 11 January 2016 | André, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 30 6162

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MANTIUK R ET AL: "Color correction for tone mapping", COMPUTER GRAPHICS FORUM, WILEY-BLACKWELL PUBLISHING LTD, GB, vol. 28, no. 2, 1 April 2009 (2009-04-01), pages 193-202, XP002596979, ISSN: 0167-7055, DOI: 10.1111/J.1467-8659.2009.01358.X * section 3 * | 1-15 | |
| A | YASIR SALIH ET AL: "Tone mapping of HDR images: A review", IEEE INTERNATIONAL CONFERENCE ON INTELLIGENT AND ADVANCED SYSTEMS, 12 June 2012 (2012-06-12), pages 368-373, XP032238666, DOI: 10.1109/ICIAS.2012.6306220 ISBN: 978-1-4577-1968-4 * the whole document * | 1-15 | |
| A | LASSERRE S ET AL: "High Dynamic Range video coding", 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, no. JCTVC-P0159, 5 January 2014 (2014-01-05), XP030115677, * the whole document * | 1-15 | TECHNICAL FIELDS SEARCHED (IPC) |

The present search report has been drawn up for all claims

| Place of search | Date of completion of the search | Examiner |
|---|---|---|
| The Hague | 11 January 2016 | André, Thomas |

EPO FORM 1503 03.82 (P04C01)

EP 3 119 088 A1

# ANNEX TO THE EUROPEAN SEARCH REPORT
## ON EUROPEAN PATENT APPLICATION NO.

EP 15 30 6162

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2016

| Patent document cited in search report | | | Publication date | Patent family member(s) | | | Publication date |
|---|---|---|---|---|---|---|---|
| WO 2012004709 | A1 | | 12-01-2012 | AU | 2011275436 | A1 | 28-02-2013 |
| | | | | CA | 2804345 | A1 | 12-01-2012 |
| | | | | CN | 102959957 | A | 06-03-2013 |
| | | | | CN | 102986214 | A | 20-03-2013 |
| | | | | EP | 2591602 | A1 | 15-05-2013 |
| | | | | EP | 2591606 | A1 | 15-05-2013 |
| | | | | JP | 2013539610 | A | 24-10-2013 |
| | | | | KR | 20130124435 | A | 13-11-2013 |
| | | | | RU | 2013104892 | A | 20-10-2014 |
| | | | | TW | 201215160 | A | 01-04-2012 |
| | | | | US | 2013107956 | A1 | 02-05-2013 |
| | | | | US | 2013108183 | A1 | 02-05-2013 |
| | | | | WO | 2012004709 | A1 | 12-01-2012 |
| | | | | WO | 2012004741 | A1 | 12-01-2012 |
| WO 2010101420 | A2 | | 10-09-2010 | CN | 102342105 | A | 01-02-2012 |
| | | | | EP | 2404446 | A2 | 11-01-2012 |
| | | | | JP | 5406316 | B2 | 05-02-2014 |
| | | | | JP | 2012519451 | A | 23-08-2012 |
| | | | | KR | 20100099506 | A | 13-09-2010 |
| | | | | US | 2010226427 | A1 | 09-09-2010 |
| | | | | WO | 2010101420 | A2 | 10-09-2010 |
| EP 2697962 | A2 | | 19-02-2014 | CA | 2830678 | A1 | 18-10-2012 |
| | | | | CN | 103503429 | A | 08-01-2014 |
| | | | | CN | 103888743 | A | 25-06-2014 |
| | | | | EP | 2697962 | A2 | 19-02-2014 |
| | | | | HK | 1188354 | A1 | 09-10-2015 |
| | | | | JP | 5661218 | B2 | 28-01-2015 |
| | | | | JP | 5762615 | B2 | 12-08-2015 |
| | | | | JP | 2014510988 | A | 01-05-2014 |
| | | | | JP | 2015062291 | A | 02-04-2015 |
| | | | | JP | 2015084546 | A | 30-04-2015 |
| | | | | KR | 20130141676 | A | 26-12-2013 |
| | | | | KR | 20140140655 | A | 09-12-2014 |
| | | | | KR | 20150056874 | A | 27-05-2015 |
| | | | | KR | 20150085100 | A | 22-07-2015 |
| | | | | KR | 20150098245 | A | 27-08-2015 |
| | | | | RU | 2013150934 | A | 20-05-2015 |
| | | | | TW | 201304558 | A | 16-01-2013 |
| | | | | TW | 201526658 | A | 01-07-2015 |
| | | | | US | 8248486 | B1 | 21-08-2012 |
| | | | | WO | 2012142589 | A2 | 18-10-2012 |
| US 2008175495 | A1 | | 24-07-2008 | NONE | | | |

EPO FORM P0459

For more details about this annex : see Official Journal of the European Patent Office, No. 12/82